(19) **Europäisches Patentamt / European Patent Office / Office européen des brevets**

(11) **EP 3 822 854 B1**

(12) # EUROPEAN PATENT SPECIFICATION

(45) Date of publication and mention of the grant of the patent:
**26.02.2025 Bulletin 2025/09**

(21) Application number: **18899032.9**

(22) Date of filing: **03.08.2018**

(51) International Patent Classification (IPC):
**G08G 1/01** (2006.01)  **G06T 7/33** (2017.01)
**G06V 20/54** (2022.01)  **G06V 20/62** (2022.01)
**G06V 30/19** (2022.01)  **G08G 1/017** (2006.01)
**G08G 1/04** (2006.01)  **H04R 1/40** (2006.01)

(52) Cooperative Patent Classification (CPC):
**G06T 7/33; G06V 20/54; G06V 20/63;**
**G06V 30/19067; G08G 1/0116; G08G 1/0133;**
**G08G 1/0175; G08G 1/04;** G06T 2207/20016;
G06T 2207/20101; G06V 20/625; G06V 30/10;
H04R 1/406; H04R 2201/401; H04R 2430/20

(86) International application number:
**PCT/CN2018/098427**

(87) International publication number:
**WO 2020/010659 (16.01.2020 Gazette 2020/03)**

(54) **ILLEGAL MOTOR VEHICLE WHISTLING CANDID PHOTOGRAPHY SYSTEM BASED ON IMAGE REGISTRATION**

AUF BILDREGISTRIERUNG BASIERENDES VERSTECKTES FOTOGRAFIESYSTEM FÜR ILLEGALEN KRAFTFAHRZEUGALARM

SYSTÈME DE PHOTOGRAPHIE SPONTANÉE DE SIFFLEMENT DE VÉHICULE À MOTEUR ILLÉGAL BASÉ SUR L'ENREGISTREMENT D'IMAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.07.2018 CN 201810750656**

(43) Date of publication of application:
**19.05.2021 Bulletin 2021/20**

(73) Proprietor: **Shanghai Keygo Technologies Co., Ltd.**
**Shanghai 200090 (CN)**

(72) Inventors:
• **ZHANG, Nanxiong**
**Shanghai 200090 (CN)**

• **WEI, Dunkai**
**Shanghai 200090 (CN)**
• **LI, Hongbin**
**Shanghai 200090 (CN)**

(74) Representative: **ZHAOffice SPRL**
**Rue de Bedauwe 13**
**5030 Gembloux (BE)**

(56) References cited:
| | |
|---|---|
| CN-A- 101 042 803 | CN-A- 105 096 606 |
| CN-A- 106 355 893 | CN-A- 106 384 510 |
| CN-A- 106 875 678 | CN-A- 107 045 784 |
| CN-A- 107 045 784 | CN-U- 207 082 221 |
| JP-A- 2002 243 534 | JP-A- 2004 191 180 |

## Description

### Technical Field

The invention relates to the technical field of intelligent traffic management, in particular to a system for capturing vehicle horn based on image pairing.

### Background Art

In the existing system capturing for vehicle horn, a coordinate transformation coefficient, between a central position coordinate of a horn sound source obtained by a microphone array and a high-definition image obtained by a high-definition camera, generally needs to be calibrated after field installation. The coordinate transformation coefficient relates to factors of the microphone array and the high-definition camera, such as installation position, angle, height, etc. The general procedure of conventional calibration for the coordinate transformation coefficient includes: using a test vehicle, respectively blowing the horn at different positions in the snapshot range; acquiring an audio signal and obtaining a central position coordinate of the horn sound source after calculation by the microphone array; finding a pixel point corresponding to the position where the license plate of the test vehicle is located when the horn is honked in a high-definition image; and calculating the coordinate transformation coefficient between the central position coordinate of the horn sound and the pixel point of the license plate by the linear coordinate transformation formula.

The calibration method for the coordinate transformation coefficient has the following three problems:

1. The calibration process is relatively tedious, and the test vehicle needs to be used for artificial manufacturing of horn sound at the installation site, which can cause adverse effects such as disturbing people and the like.
2. The coordinate transformation coefficient calibrated by the field use of the test vehicle to blow the horn may have a large error, and finally causes inaccurate positioning of the vehicle with illegal horn use. The error comes from two aspects, one aspect is that the central position coordinate of the horn sound calculated by the microphone array can be deviated due to the interference of the live sound; the other aspect is that different test vehicle horns have different installation positions, structures, and the sound generation positions are significantly different, while the sound generation position is assumed to be in the middle position where the license plate is located when performing calibration. Errors exist in both of the central position coordinate of the horn sound source and the sound generation position of the test vehicle designated in the high-definition image which are obtained after calculation. Therefore, an error must exist in the coordinate transformation coefficient obtained by calibration.
3. Once the calibration is complete, the obtained coordinate transformation coefficient is fixed. However, the original calibrated coordinate transformation coefficient is no longer applicable since a relative position between the microphone array and the high-definition camera is possible to change due to weather, temperature, human and other factors in the using process, so that the accuracy rate of the snapshot system will decrease, and it is even possible to capture a vehicle wrongly.

CN107045784 A relates to an electronic traffic police system which comprises a whistle sound acquisition unit, a whistle sound recognition unit, a whistle sound source location unit, a position measurement unit, a whistle sound source tracking unit, an image acquisition unit and a license plate recognition unit, wherein the whistle sound acquisition unit, the whistle sound recognition unit, the whistle sound source location unit, the position measurement unit, the whistle sound source tracking unit, the image acquisition unit and the license plate recognition unit are based on a microphone array and are successively connected.

CN106355893 A discloses a method for real-time positioning of a whistling motor vehicle. The method for real-time positioning of a whistling motor vehicle comprises the following steps: obtaining real-time sound data; obtaining real-time image data; judging whether a whistling sound exists according to the real-time sound data; if the whistling sound exists, identifying the source direction of the whistling sound; and positioning the whistling motor vehicle according to the source direction of the whistling sound and the real-time image data.

CN106384510 A discloses an illegal honking snapshot system comprising a camera snapshot system and an omnidirectional passive sonar. The camera snapshot system comprises a host and a high-definition camera. The high-definition camera and the omnidirectional passive sonar are connected with the host. The distance between the high-definition camera and the omnidirectional passive sonar is not zero. The omnidirectional passive sonar comprises sixteen energy converters of which the openings are all exactly downward. Every four energy converters form a row. The host is internally provided with a Linux or Windows system.

CN106875678 A discloses a law enforcement and evidence taking system for car horning. The system is composed of a sonar system and a high-definition camera. The sonar system is responsible for collecting sound data, calculating a spectrum characteristic, and determining whether a horn sound is an effective one based on the spectrum characteristic; and if the horn sound is an effective one, the high-definition camera is triggered to capture a car image, licence plate information is identified, and car horning feature audio frequency information is recorded.

**Summary of the Invention**

To solve the deficiencies in the prior art, the invention is as set out in the appended set of claims. The invention provides a system for capturing vehicle horn based on image pairing, which can automatically and accurately calibrate a coordinate transformation coefficient between a central position coordinate of a horn sound source obtained by a microphone array and a pixel point of a high-definition image obtained by a high-definition camera.

The invention is implemented by the following technical scheme.

The invention relates to a system for identifying a vehicle using a horn based on sound source positioning and image pairing and a corresponding method according to respectively claim 1 and claim 3 of the appended claims.

Other features of the embodiments are set out in the dependent claims. frame of low-resolution image which is acquired from the integrated microphone array and superimposed with the central position coordinate of the horn sound source when the horn is honked, and at the same time, acquires a frame of high-resolution image from the high-definition camera and outputs the high-resolution image to an image pairing system; and the image pairing system acquires an inter-image transformation coefficient between the low-resolution image and the high-resolution image, so as to obtain the corresponding position of the central position coordinate of the horn sound source in the high-resolution image, and provides the License information of the vehicle corresponding to the position via the image target recognition technology.

The camera and the microphone array in the integrated microphone array are of an integrated design. Once the assembly and calibration of the integrated microphone array itself are complete, the relative position of the camera and all microphones in the microphone array are unchanged; a sound source central position coordinate which is obtained by the integrated microphone array after calculation and a preset coordinate coefficient of the pixel point in the low-resolution image are unchanged; and the integrated microphone array outputs a low-resolution image which is superimposed with the central position coordinate of the horn sound source to the control unit.

The invention relates to an image pairing method implemented in the above system. The method includes: acquiring, by the control unit, two image frames at the same time from the integrated microphone array and the high-definition camera; acquiring, by the image pairing system, a feature point of an image and a descriptor corresponding to the feature point for each of the image frames; obtaining a feature point similarity according to the information of a feature point descriptor; ranking the feature point similarities; selecting a plurality of feature points with the highest feature point similarity and the fixed positions on the image frames as matching feature points of the two image frames; and calculating the inter-image transformation coefficient between the integrated microphone array camera and the high-definition camera by the linear coordinate transformation, so as to realize the position matching from the low-resolution image frame to the high-resolution image frame.

The acquiring of the feature point of the image refers to: performing Gaussian blur on the image to construct a Gaussian pyramid and obtain different scale spaces; obtaining local extreme points through extreme-point detection on different scale spaces; and performing preliminary and accurate positioning on the local extreme points, deleting an edge response point, and obtaining the feature point.

Preferably, the feature points are at least four pairs, and further preferably are six pairs.

The feature point descriptor is generated according to the gradient magnitude and direction of the feature point.

The feature point similarity refers to: calculating the similarity metric between any two feature point descriptors

according to to$d$ $$d(R_i, S_i) = \sqrt{\sum_{j=1}^{128}(r_{ij} - s_{ij})^2}$$, and calculating the feature point similarity according to feature point

similarity = $\dfrac{\text{point } S_j \text{closest to } R_i \text{ in the high-resolution image}}{\text{point } S_p \text{ second closest to } R_i \text{ in the high-resolution image}}$ for the feature point descriptor $R_i = (r_{i1}, r_{i2}, ... , r_{i128})$ in the high-resolution image and the feature point descriptor $S_i = (s_{i1}, s_{i2}, ..., s_{i128})$ in the low-resolution image.

The invention relates to an image pairing system for realizing the above method, including an image preprocessing module, a feature point calculation module, a feature point descriptor calculation module, a feature point similarity calculation module, a ranking module and a linear coordinate transformation module; in which the image preprocessing module is connected with the feature point calculation module and outputs an image after grayscale processing to the feature point calculation module; the feature point calculation module is connected with the feature point descriptor calculation module and outputs feature point information to the feature point descriptor calculation module; the feature point descriptor calculation module is connected with the feature point similarity calculation module and outputs the feature point descriptor information to the feature point similarity calculation module; the feature point similarity calculation module is connected with the ranking module and outputs feature point similarity information to the ranking module; the ranking module is connected with the linear coordinate transformation module and outputs a matching feature point to the linear coordinate transformation module; and the linear coordinate transformation module obtains the inter-image transformation coefficient of the two frame of images after calculation.

**Technical Effects**

Compared to the prior art, the invention adopts the integrated microphone array and the high-definition camera to monitor the horn use; the coordinate transformation between the integrated microphone array and the high-definition camera is completed based on the image pairing method; the inter-image transformation coefficient between the integrated microphone array and the high-definition camera can be calibrated quickly and accurately without the need to blow the test vehicle horn on the spot; and the calibration error is extremely small, and the invention is not influenced by the environment of the installation site. During system use, it can be selected whether to recalculate the inter-image transformation coefficient through image pairing when taking a snapshot of illegal horn use each time, so that the accuracy of each snapshot of illegal horn use each time can be ensured even if the relative position between the integrated microphone array and the high-definition camera changes due to natural, human and other factors.

**Brief Description of the Drawings**

FIG. 1 is a flow chart of the invention;
FIG. 2 is a schematic diagram of an embodiment;
FIG. 3 is a schematic diagram of an integrated microphone array, in which 1 is a microphone in the microphone array and 2 is a camera;
FIG. 4 is a flow chart for image pairing calculation;
FIG. 5 is six pairs of matching feature points of two frame of images obtained according to the image pairing calculation, and the six pairs of matching feature points have the highest similarity and the positions are fixed on the image, in which a is a low-resolution image, and b is a high-resolution image;
FIG. 6 is a graph-aided flow chart of obtaining evidence in the invention.

The license plate number and the digital content in the drawings are both modified in the invention, and bear no relation to the actual vehicle with the same license plate.

**Description of Embodiments**

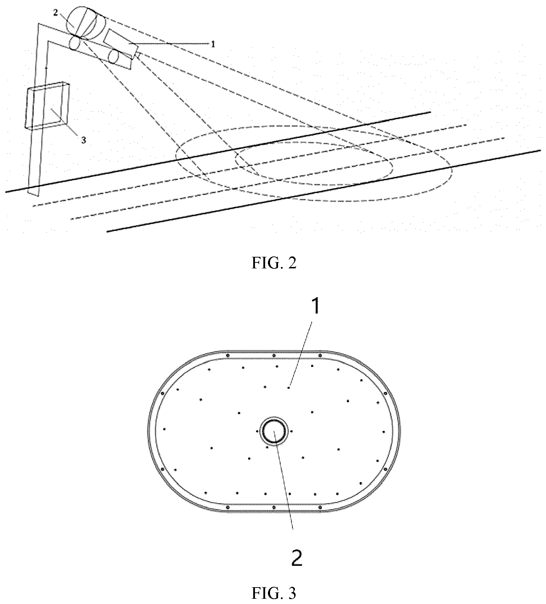

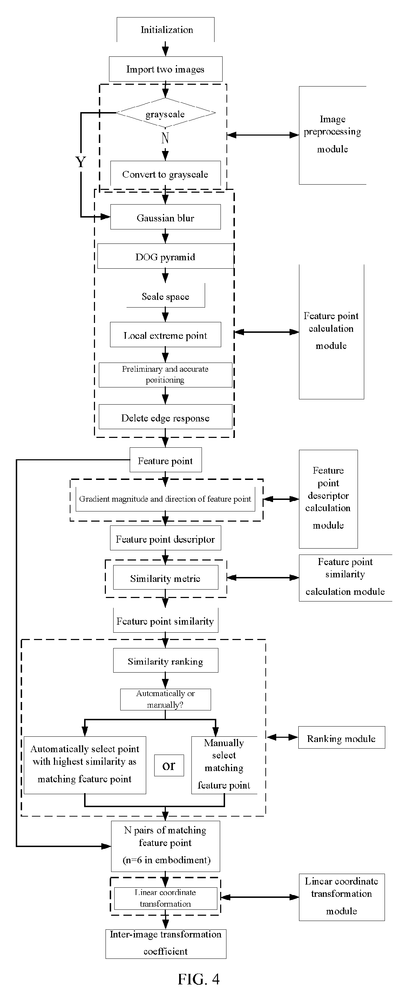

As shown in FIGS. 2 and 3, the embodiment includes: an integrated microphone array, a high-definition camera, a control unit, and an image pairing system; in which the integrated microphone array includes a microphone array composed of a plurality of microphones and a camera, which are used for acquiring audio information and a static and/or dynamic low-resolution image in real time, and the high-definition camera acquires a high-resolution image in real time; a camera involved in the integrated microphone array is usually low in resolution, and obtains a low-resolution image; and the high-definition camera obtains the high-resolution image which can be used for identifying License information of the vehicle.

The image pairing system includes: an image preprocessing module, a feature point calculation module, a feature point descriptor calculation module, a feature point similarity calculation module, an ranking module and a linear coordinate transformation module; in which the image preprocessing module is connected with the feature point calculation module and outputs an image after grayscale processing to the feature point calculation module; the feature point calculation module is connected with the feature point descriptor calculation module and outputs feature point information to the feature point descriptor calculation module; the feature point descriptor calculation module is connected with the feature point similarity calculation module and outputs the feature point descriptor information to the feature point similarity calculation module; the feature point similarity calculation module is connected with the ranking module and outputs feature point similarity information to the ranking module; the ranking module is connected with the linear coordinate transformation module and outputs a matching feature point to the linear coordinate transformation module; and the linear coordinate transformation module obtains an inter-image transformation coefficient of the two frame of images after calculation.

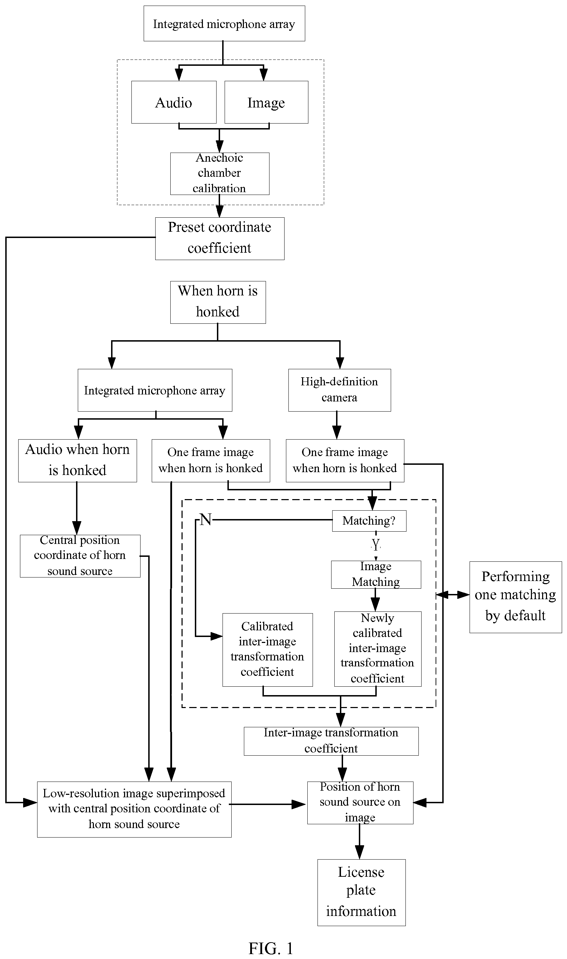

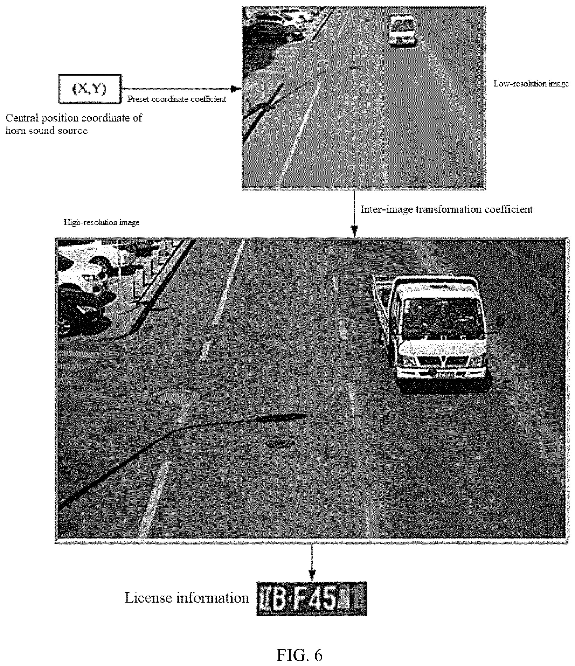

As shown in FIGS. 1 and 6, the control unit determines whether the horn is honked, acquires a frame of low-resolution image which is superimposed with the central position coordinate of the horn sound source from the integrated microphone array; a frame of high-resolution image is acquired from the high-definition camera at the same time; and the image pairing system acquires the inter-image transformation coefficient between the low-resolution image and the high-resolution image, so as to obtain the corresponding position of the central position coordinate of the horn sound source in the high-resolution image, and provides the License information of the vehicle corresponding to the position in combination with the image target recognition technology.

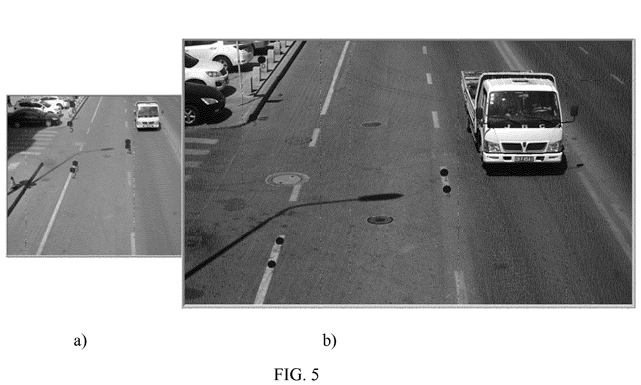

As shown in FIG. 4, the image pairing system automatically acquires two frame of images at the same time from the integrated microphone array camera and the high-definition camera, acquires a feature point of the image and a descriptor corresponding to the feature point for each of the images, obtains a feature point similarity according to the information of the feature point descriptor, ranks the feature point similarities, automatically selects a plurality of feature points with the highest feature point similarity and the fixed positions on the image as matching feature points of the two frame of images, calculates the inter-image transformation coefficient between the integrated microphone array camera and the high-definition camera through linear coordinate transformation, and calculates a corresponding pixel point coordinate on the image acquired by the high-definition camera from any pixel point coordinate on the image acquired by the integrated microphone array camera by the inter-image transformation coefficient. The specific process is as follows.

Step 1, performing grayscale processing on the image.

Step 2, constructing a Gaussian pyramid to obtain different scale spaces after performing Gaussian blur on the image; obtaining local extreme points through extreme-point detection on different scale spaces; obtaining the feature point after performing preliminary and accurate positioning on the local extreme points and deleting an edge response point; generating the feature point descriptor according to the gradient magnitude and direction of the feature point; obtaining the feature point similarity according to the information of the feature point descriptor; and ranking the feature point similarities. *n* pairs of feature points with the highest feature point similarity and the fixed positions on the image can be automatically or manually selected as the matching feature points of the two frame of images, in which $n \geq 4$. In the embodiment, $n = 6$, and *n* is not limited to value 6 in the present embodiment, as shown in FIG. 5.

The Gaussian blur means that: a Gaussian function in an N-dimensional space is used to obtain a two-dimensional fuzzy template by calculation, and the two-dimensional fuzzy template is used to perform convolution operation with the original image, so as to blur the image.

The Gaussian function in the N-dimensional space is: $G(r) = \frac{1}{\sqrt{2\pi\sigma^2}^N} e^{-\frac{r^2}{2\sigma^2}}$ , in which $\sigma$ is the standard deviation of the normal distribution, the greater the value of $\sigma$, the more blurred the image becomes; and *r* is the blur radius which refers to the distance from the template element to the template center.

The convolution refers to: calculating the size of the Gaussian template matrix according to the value of $\sigma$, calculating the value of the Gaussian template matrix, performing convolution with the original image, and obtaining a Gaussian blur image of the original image. That is, the scale space $L(x, y, \sigma)$ of one image is defined as the convolution of a Gaussian function $G(x, y, \sigma)$ of varying scale and the original image $I(x,y)$, $L(x, y, \sigma) = G(x, y, \sigma) * I(x, y)$, in which * represents a convolution operation.

The size of the two-dimensional fuzzy template is *m* * *n*, and the Gaussian calculation formula corresponding to the elements (x, y) on the template is $G(x, y) = \frac{1}{2\pi\sigma^2} e^{\frac{-(x-\frac{m}{2})^2+(y-\frac{n}{2})^2}{2\sigma^2}}$ .

To ensure that the elements in the template matrix are between [0,1], it is preferable to normalize the two-dimensional fuzzy template matrix, and a 5*5 Gaussian template is shown in the table below:

| 6.58573e-006 | 0.000424781 | 0.00170354 | 0.000424781 | 6.58573e-006 |
|---|---|---|---|---|
| 0.000424781 | 0,0273984 | 0.109878 | 0.0273984 | 0.000424781 |
| 0.00170354 | 0.109878 | 0.440655 | 0.109878 | 0.00170354 |
| 0.000424781 | 0.0273984 | 0.109878 | 0.0273984 | 0.000424781 |
| 6.58573e-006 | 0.000424781 | 0.00170354 | 0.000424781 | 6.58573e-006 |

The number of layers of the Gaussian pyramid is determined according to the original size of the image and the size of the top image, and the number of layers $n = \log_2\{\min(M, N)\} - t$, $t \in [0, \log_2\{\min(M, N)\}]$, in which *M* and *N* are the sizes of the original image, and *t* is the logarithmic value of the smallest dimension of the top image.

The Gaussian pyramid uses a difference of Gaussian (DOG) for extreme value detection, that is, $D(x, y, \sigma) = [G(x, y, k\sigma) - G(x, y, \sigma)] * I(x, y) = L(x, y, k\sigma) - L(x, y, \sigma)$, and compares each pixel point with an adjacent point on the image domain and the scale domain to obtain a local extreme point.

The preliminary and accurate positioning means that: the Taylor expansion (fitting function) of the DOG in the scale space is: $D(X) = D + \frac{\partial D^T}{\partial X} X + \frac{1}{2} X^T \frac{\partial^2 D}{\partial X^2} X$ , in which $X = (x, y, \sigma)^T$; the offset of the extreme point is $\hat{X} = -\frac{\partial^2 D^{-1}}{\partial X^2} - \frac{\partial D}{\partial X}$ through derivation; the value of the corresponding equation is $D(\hat{X}) = D + \frac{1}{2} \frac{\partial D^T}{\partial X} \hat{X}$ , and all extreme points in which D(X) is less than 0.04 are deleted, so that a preliminary and accurate positioning result is obtained, and 0.04 is an empirical value.

Preferably, the preliminary and accurate positioning result obtained as above are further performed deletion on an unstable edge response point, which specifically refers to: constructing a Hessian matrix, $H = \begin{bmatrix} D_{xx} & D_{xy} \\ D_{xy} & D_{yy} \end{bmatrix}$ , in which: $Tr(H) = D_{xx} + D_{xy} = \alpha + \beta$ , $Det(H) = D_{xx}D_{yy} - (D_{xy})^2 = \alpha\beta$ , $\alpha$ represents a gradient in the x direction, $\beta$ represents a gradient in the y direction, r is generally taken as 10 to detect whether the main curvature is at a certain domain value r; and $\frac{Tr(H)^2}{Det(H)} < \frac{(r+1)^2}{r}$ is detected, and the feature point is kept when satisfied, or the feature point is deleted, so as to obtain an accurate positioning result.

The modulus and direction of the feature point gradient are: the pixel point gradient is denoted as $grad(I(x,y)) = \left(\frac{\partial I}{\partial x}, \frac{\partial I}{\partial y}\right)$ ; the gradient magnitude is represented as m(x, y) = $\sqrt{(L(x+1,y) - L(x-1,y))^2 + (L(x,y+1) - L(x,y-1))^2}$ ; and the gradient direction is: $\theta(x,y) = \tan^{-1}\left[\frac{L(x,y+1) - L(x,y-1)}{L(x+1,y) - L(x-1,y)}\right]$ .

The feature point descriptor mean that: the feature point is described with a set of vectors to prevent the vectors from changing with illumination, viewing angle, and the like; the vector, or the feature point descriptor, include the feature point and the pixel point which are around the feature point and contribute to the feature point, and the feature point descriptor should have higher uniqueness in order to increase the probability that the feature point is correctly matched.

The feature point descriptor is obtained by calculation in the following manner:

A1: determining $radius = \frac{3\sigma_{oct} \times \sqrt{2} \times (d+1) + 1}{2}$ required to calculate the feature point descriptor in an image region, in which: $\sigma_{oct}$ is the group scale of a group where the feature point is located; and d is the number of sub-regions which are divided from the neighborhood near the feature point, and generally d=4;

A2: moving the coordinate to the main direction of the feature point, and the new coordinate is: $\begin{pmatrix} \hat{x} \\ \hat{y} \end{pmatrix} = \begin{pmatrix} \cos\theta & -\sin\theta \\ \sin\theta & \cos\theta \end{pmatrix} \times \begin{pmatrix} x \\ y \end{pmatrix}$ ;

A3: solving the gradient magnitude and direction of each pixel point in the image radius region, then multiplying each gradient amplitude by a Gaussian weight parameter to generate a direction histogram: weight = $|grad(I_\sigma(x,y))| \times exp\left(-\frac{x_k^2 + y_k^2}{2\sigma_w}\right) \times (1 - d_r) \times (1 - d_c) \times (1 - d_o)$ , in which: $x_k$ is the column distance of the point to the feature point, $y_k$ is the row distance of the point to the feature point, $\sigma_w$ is half of the product of the feature point descriptor window width $3\sigma$ and the column number of the histogram, $d_r$ is the contributing factor to the neighboring row, $d_c$ is the contributing factor to the neighboring column, and $d_o$ is the contributing factor to the neighboring direction;

A4: normalizing the vector of the feature point descriptor, the vector of 128 feature point descriptor is $W = (w_1, w_2, ..., w_{128})$, the normalized vector is $L = (l_1, l_2, ..., l_{128})$, in which: $l_j = \frac{w_j}{\sqrt{\sum_{i=1}^{128} w_i}}$ , j = 1,2, ...,128.

The feature point similarity refers to: calculating the similarity metric between any two feature point descriptors according to $d(R_i, S_i) = \sqrt{\sum_{j=1}^{128}(r_{ij} - s_{ij})^2}$ , and calculating the feature point similarity according to feature point

$$similarity = \frac{point\ S_j\ closest\ to\ R_i\ in\ the\ high-resolution\ image}{point\ S_p\ second\ closest\ to\ R_i\ in\ the\ high-resolution\ image}$$ for the feature point descriptor $R_i = (r_{i1}, r_{i2}, ..., r_{i128})$ in the high-resolution image and the feature point descriptor $S_i = (s_{i1}, s_{i2}, ..., s_{i128})$ in the low-resolution image.

The feature point similarity ranking refers to: ranking the feature point from high to low according to the feature point similarity; n pairs of feature points with the highest feature point similarity and the fixed positions on the image can be automatically or manually selected and defined as the matching feature points, in which $n \geq 4$. In the embodiment, $n = 6$, and $n$ is not limited to the value 6 in the present embodiment.

Step 3, performing spatial coordinate transformation:

$$\begin{bmatrix} x \\ y \\ 1 \end{bmatrix} = \begin{bmatrix} h_{11} & h_{12} & h_{13} \\ h_{21} & h_{22} & h_{23} \\ h_{31} & h_{32} & 1 \end{bmatrix} \begin{bmatrix} x' \\ y' \\ 1 \end{bmatrix}$$

A1: the projective transformation formula is , in which: $(x, y)$ is the central position coordinate of the sound source on the low-resolution image obtained by the integrated microphone array, $(x', y')$ is the pixel point coordinate of the high-resolution image obtained by the high-definition camera, $\begin{bmatrix} h_{11} & h_{12} \\ h_{21} & h_{22} \end{bmatrix}$ is a rotation matrix, $[h_{31}\ h_{32}]$ is a translation vector, and $\begin{bmatrix} h_{13} \\ h_{23} \end{bmatrix}$ is a scaling dimension.

A2: an inter-image transformation coefficient, between the low-resolution image pixel point coordinate obtained by the integrated microphone array and the high-resolution image pixel point coordinate obtained by the high-definition camera, is obtained by establishing an equation set as follows, and is solved by means of a least square method;

$$\begin{bmatrix} x_1 & y_1 & 1 & 0 & 0 & 0 & -x_1'x_1 & -x_1'y_1 \\ 0 & 0 & 0 & x_1 & y_1 & 1 & -y_1'x_1 & -y_1'y_1 \\ x_2 & y_2 & 1 & 0 & 0 & 0 & -x_2'x_2 & -x_2'y_2 \\ 0 & 0 & 0 & x_2 & y_2 & 1 & -y_2'x_2 & -y_2'y_2 \\ x_3 & y_3 & 1 & 0 & 0 & 0 & -x_3'x_3 & -x_3'y_3 \\ 0 & 0 & 0 & x_3 & y_3 & 1 & -y_3'x_3 & -y_3'y_3 \\ x_4 & y_4 & 1 & 0 & 0 & 0 & -x_4'x_4 & -x_4'y_4 \\ 0 & 0 & 0 & x_4 & y_4 & 1 & -y_4'x_4 & -y_4'y_4 \\ \vdots & \vdots & \vdots & \vdots & \vdots & \vdots & \vdots & \vdots \\ x_n & y_n & 1 & 0 & 0 & 0 & -x_n'x_n & -x_n'y_n \\ 0 & 0 & 0 & x_n & y_n & 1 & -y_n'x_n & -y_n'y_n \end{bmatrix} \begin{bmatrix} h_{11} \\ h_{12} \\ h_{13} \\ h_{21} \\ h_{22} \\ h_{23} \\ h_{31} \\ h_{32} \end{bmatrix} = \begin{bmatrix} x_1' \\ y_1' \\ x_2' \\ y_2' \\ x_3' \\ y_3' \\ x_4' \\ y_4' \\ \vdots \\ x_n' \\ y_n' \end{bmatrix}$$

In , $(x_i, y_i)$ is the matching feature point coordinate of the low-resolution image obtained by the integrated microphone array, ( $x_i', y_i'$ ) is the matching feature point coordinate of the high-resolution image obtained by the high-definition camera, $i = 1,2,3,\cdots n$, $n \geq 4$, and $n = 6$ in the embodiment.

$[h_{11}\ h_{12}\ h_{13}\ h_{21}\ h_{22}\ h_{23}\ h_{31}\ h_{32}]^T$ is the inter-image transformation coefficient.

A3: obtained from the projective transformation formula, the central position coordinate $(x, y)$ of the sound source on the low-resolution image obtained by the integrated microphone array corresponds to the coordinate $(x', y')$ in the high-resolution image obtained by the high-definition camera as follows:

$$x' = \frac{h_{11}x + h_{12}y + h_{13}}{h_{31}x + h_{32}y + 1}, y' = \frac{h_{21}x + h_{22}y + h_{23}}{h_{31}x + h_{32}y + 1}$$

The central position coordinate of the horn sound source is obtained by positioning the sound source of the vehicle with illegal horn use by means of the beamforming algorithm based on spherical wave except auto spectrum, and generating a sound pressure nephogram; and the coordinate corresponding to the maximum value of the sound pressure in the sound pressure nephogram is the central position coordinate of the horn sound source.

$$V(k, w) = \frac{1}{M^2-M} \sum_{m \neq n}^{M} C_{nm} e^{jk \cdot (r_m - r_n)}$$

Specifically, the beamforming algorithm is: , in which $V(k, w)$ is the mean square value of the beamforming, k is the focusing direction, w is the angular frequency, M is the number of sensors of the microphone array, $C_{nm}$ is the cross-spectrum of the sound pressure signal received by the mth microphone relative to the sound pressure signal received by the $n$th microphone, $r_m$ is the coordinate vector of the mth microphone, and $r_n$ is the coordinate vector of the nth microphone.

. The scope of the invention is subjected to the claims and is not limited by the foregoing detailed embodiments. All implementations within the scope thereof are restricted by the invention.

**Claims**

1. A system for identifying a vehicle using a horn based on sound source positioning and image pairing, the system comprising:

   an integrated microphone array configured to acquire audio and a low-resolution image frame in real time;
   a high-definition camera configured to acquire a high-resolution image frame in real time;
   a control unit (3); and
   an image pairing system,
   wherein the integrated microphone array includes a microphone array composed of a plurality of microphones (1) and a camera (2) configured to acquire the low-resolution image frame; the control unit (3) is configured to monitor the image frame of low-resolution which is acquired from the integrated microphone array and superimposed with a central position coordinate of a horn sound source when a horn is honked which is obtained by the integrated microphone array after calculation, and at the same time, is configured to acquire the image frame of high-resolution from the high-definition camera and is configured to output the high-resolution image frame to the image pairing system; and the image pairing system is configured to acquire an inter-image transformation coefficient between the low-resolution image frame and the high-resolution image frame, so as to obtain a corresponding position of the central position coordinate of the horn sound source in the high-resolution image frame, and is configured to provide License information of a vehicle corresponding to the position via an image target recognition technology.

2. The system according to claim 1, wherein the camera (2) and the microphone array in the integrated microphone array are of an integrated design, that is, the relative position of the camera (2) and all microphones (1) of the microphone array are unchanged, a sound source central position coordinate which is obtained by the integrated microphone array after calculation and a preset coordinate coefficient of a pixel point in the low-resolution image frame are unchanged; and the integrated microphone array outputs the low-resolution image frame superimposed with the central position coordinate of the horn sound source to the control unit.

3. An image pairing method implemented in the system according to claim 1 or 2, the image pairing method comprising:

   acquiring, by the control unit (3), two image frames at the same time from the integrated microphone array and the high-definition camera;
   acquiring, by the image pairing system, a feature point and a corresponding feature point descriptor for each of the image frames;
   obtaining a feature point similarity according to the feature point descriptor information;
   ranking the feature point similarities;
   selecting a plurality of feature points with the highest feature point similarity and fixed positions on the image frames as matching feature points of the two image frames;
   calculating an inter-image transformation coefficient between the integrated microphone array camera and the high-definition camera through a linear coordinate transformation; and
   achieving position matching between the low-resolution image frame and the high-resolution image frame.

4. The method according to claim 3, wherein acquiring the feature point of the image frame refers to: performing Gaussian blur on the image frame to construct a Gaussian pyramid and obtain different scale spaces; obtaining a local extreme point through extreme-point detection on different scale spaces; and performing preliminary and accurate positioning on the local extreme point, deleting an edge response point, and obtaining the feature point.

5. The method according to claim 3, wherein the feature point includes at least four pairs.

6. The method according to claim 3, wherein a feature point descriptor is generated according to gradient magnitude and direction of the feature point.

7. The method according to claim 3, wherein the feature point descriptor is obtained by calculation in the following ways:

A1: determining $radius = \frac{3\sigma_{oct} \times \sqrt{2} \times (d+1)+1}{2}$ required to calculate the feature point descriptor in an image region, wherein $\sigma_{oct}$ is group scale of a group where the feature point is located; and d is the number of sub-regions which are divided from the neighborhood near the feature point;

A2: moving a coordinate to the main direction of the feature point, and a new coordinate is:

$$\begin{pmatrix} \hat{x} \\ \hat{y} \end{pmatrix} = \begin{pmatrix} \cos\theta & -\sin\theta \\ \sin\theta & \cos\theta \end{pmatrix} \times \begin{pmatrix} x \\ y \end{pmatrix};$$

A3: solving the gradient magnitude and direction of each pixel point in an image radius region, then multiplying each gradient amplitude by a Gaussian weight parameter to generate a direction histogram: $weight = |grad(I_\sigma(x,$

$y))| \times exp\left(-\frac{x_k^2+y_k^2}{2\sigma_w}\right) \times (1-d_r) \times (1-d_c) \times (1-d_o)$, wherein: $x_k$ is the column distance of the point to the feature point, $y_k$ is the row distance of the point to the feature point, $\sigma_w$ is half of the product of the feature point descriptor window width $3\sigma$ and the column number of a histogram, $d_r$ is the contributing factor to a neighboring row, $d_c$ is the contributing factor to a neighboring column, and $d_o$ is the contributing factor to a neighboring direction; and

A4: normalizing a vector of the feature point descriptor, the vector of 128 feature point descriptor is $W = (w_1, w_2, ..., w_{128})$, a normalized vector is $L = (l_1, l_2, ..., l_{128})$, wherein: $l_j = \frac{w_j}{\sqrt{\sum_{i=1}^{128} w_i}}$, $j = 1,2, ...,128$.

8. The method according to claim 3, wherein the feature point similarity refers to: calculating similarity metric between any two feature point descriptors according to $d(R_i, S_i) = \sqrt{\sum_{j=1}^{128}(r_{ij} - s_{ij})^2}$, and calculating the feature point similarity according to feature point $similarity = \frac{\text{point } S_j \text{ closest to } R_i \text{ in the high-resolution image frame}}{\text{point } S_p \text{ second closest to } R_i \text{ in the high-resolution image frame}}$ for the feature point descriptor $R_i = (r_{i1}, r_{i2}, ..., r_{i128})$ in the high-resolution image frame and the feature point descriptor $S_i = (s_{i1}, s_{i2}, ..., s_{i128})$ in the low-resolution image frame.

9. The method according to claim 3, wherein the linear coordinate transformation specifically includes the following steps:

A1: a projective transformation formula is: $\begin{bmatrix} x \\ y \\ 1 \end{bmatrix} = \begin{bmatrix} h_{11} & h_{12} & h_{13} \\ h_{21} & h_{22} & h_{23} \\ h_{31} & h_{32} & 1 \end{bmatrix} \begin{bmatrix} x' \\ y' \\ 1 \end{bmatrix}$, wherein: (x, y) is a central position coordinate of a sound source on the low-resolution image frame obtained by the integrated microphone array, (x', y') is a pixel point coordinate of the high-resolution image frame obtained by the high-definition camera,

$$\begin{bmatrix} h_{11} & h_{12} \\ h_{21} & h_{22} \end{bmatrix}$$ is a rotation matrix, $[h_{31}\ h_{32}]$ is a translation vector, and $$\begin{bmatrix} h_{13} \\ h_{23} \end{bmatrix}$$ is a scaling dimension;

A2: the inter-image transformation coefficient, between a low-resolution image frame pixel point coordinate obtained by the integrated microphone array and a high-resolution image frame pixel point coordinate obtained by the high-definition camera, is obtained by establishing an equation set as follows, and is solved by means of a least square method:

$$
\begin{bmatrix}
x_1 & y_1 & 1 & 0 & 0 & 0 & -x_1'x_1 & -x_1'y_1 \\
0 & 0 & 0 & x_1 & y_1 & 1 & -y_1'x_1 & -y_1'y_1 \\
x_2 & y_2 & 1 & 0 & 0 & 0 & -x_2'x_2 & -x_2'y_2 \\
0 & 0 & 0 & x_2 & y_2 & 1 & -y_2'x_2 & -y_2'y_2 \\
x_3 & y_3 & 1 & 0 & 0 & 0 & -x_3'x_3 & -x_3'y_3 \\
0 & 0 & 0 & x_3 & y_3 & 1 & -y_3'x_3 & -y_3'y_3 \\
x_4 & y_4 & 1 & 0 & 0 & 0 & -x_4'x_4 & -x_4'y_4 \\
0 & 0 & 0 & x_4 & y_4 & 1 & -y_4'x_4 & -y_4'y_4 \\
\vdots & \vdots & \vdots & \vdots & \vdots & \vdots & \vdots & \vdots \\
x_n & y_n & 1 & 0 & 0 & 0 & -x_n'x_n & -x_n'y_n \\
0 & 0 & 0 & x_n & x_n & 1 & -y_n'x_n & -y_n'y_n
\end{bmatrix}
\begin{bmatrix}
h_{11} \\ h_{12} \\ h_{13} \\ h_{21} \\ h_{22} \\ h_{23} \\ h_{31} \\ h_{32}
\end{bmatrix}
=
\begin{bmatrix}
x_1' \\ y_1' \\ x_2' \\ y_2' \\ x_3' \\ y_3' \\ x_4' \\ y_4' \\ \vdots \\ x_n' \\ y_n'
\end{bmatrix}
$$

in , wherein $(x_i, y_i)$ is a matching feature point coordinate of the low-resolution image frame obtained by the integrated microphone array, ($x_i', y_i'$) is the matching feature point coordinate of the high-resolution image frame obtained by the high-definition camera, $i = 1,2,3,\cdots n$, $n \geq 4$, and $[h_{11}\,h_{12}\,h_{13}\,h_{21}\,h_{22}\,h_{23}\,h_{31}\,h_{32}]^T$ is the inter-image transformation coefficient; and

A3: obtained from the projective transformation formula, the central position coordinate $(x, y)$ of the sound source on the low-resolution image frame obtained by the integrated microphone array corresponds to the coordinate ($x'$, $y'$) in the high-resolution image frame obtained by the high-definition camera as follows:

$$ x' = \frac{h_{11}x + h_{12}y + h_{13}}{h_{31}x + h_{32}y + 1}, \quad y' = \frac{h_{21}x + h_{22}y + h_{23}}{h_{31}x + h_{32}y + 1} . $$

**Patentansprüche**

1. System zur Identifizierung eines eine Hupe benutzenden Fahrzeuges basiert auf Schallquellepositionierung und Bildpaarung, wobei das System umfasst:

   eine integrierte Mikrofon-Array konfiguriert zur Erfassung von Audio und eines niedrigauflösenden Bildrahmens in Echtzeit;
   eine hochauflösende Kamera konfiguriert zur Erfassung eines hochauflösenden Bildrahmens in Echtzeit;
   eine Steuereinheit (3), und
   ein Bildpaarungssystem,
   wobei die integrierte Mikrofon-Array eine Mikrofon-Array, die aus einer Vielfalt von Mikrofonen (1) besteht, und aus einer Kamera (2) konfiguriert zur Erfassung niedrigauflösender Bildrahmen besteht; die Steuereinheit (3) zur Überwachung des niedrigauflösender Bildrahmens konfiguriert ist, der von der integrierten Mikrofon-Array erfasst ist und mit einer Mittenstellungskoordinate einer Hupeschallquelle überlagert ist, wenn eine Hupe betätigt wird, die von der integrierten Mikrofon-Array nach Berechnung erhalten ist, und gleichzeitig zur Erfassung des Bildrahmens höher Auflösung von der hochauflösenden Kamera konfiguriert ist, und zur Ausgabe des hochauflösenden Bildrahmens zum Bildpaarungssystem konfiguriert ist; und das Bildpaarungssystem zur Erfassung einer Zwischenbildertransformationskoeffizient zwischen dem niedrigauflösender Bildrahmen und dem hochauflösenden Bildrahmen konfiguriert ist, damit eine entsprechende Stelle der Mittenstellungskoordinate der Hupeschallquelle in dem hochauflösenden Bildrahmen erhalten wird, und zur Verschaffung Zulassungsinformationen eines der Position entsprechenden Fahrzeuges über eine Bildzielerkennungstechnologie konfiguriert ist.

2. System nach Anspruch 1, wobei die Kamera (2) und die Mikrofon-Array in der integrierten Mikrofon-Array eine integrierte Gestaltung aufweist, nämlich, dass die relative Stelle der Kamera (2) und aller Mikrofonen (1) der Mikrofon-Array unverändert sind, eine Schallquellemittenstellungskoordinate, die von der integrierten Mikrofon-Array nach Berechnung erhalten ist, und ein voreingestellter Koordinatenkoeffizient eines Pixelpunktes in dem niedrigauflösenden Bildrahmen unverändert sind; und die integrierte Mikrofon-Array den niedrigauflösender Bildrahmen mit der Mittelstellungskoordinate der Hupeschallquelle überlagert zur Steuereinheit ausgibt.

3. Bildpaarungssystemverfahren in dem System nach Anspruch 1 oder 2 durchgeführt, wobei das Verfahren die folgenden Schritte umfasst:

gleichzeitige Erfassung, durch die Steuereinheit (3), von zwei Bildrahmen gleichzeitig von der integrierten Mikrofon-Array und von der hochauflösenden Kamera;
Erfassung, durch das Bildpaarungssystem, eines Merkmalspunktes und eines entsprechenden Merkmalspunktdeskriptors für jeden der Bildrahmen;
Erhalten einer Merkmalspunktähnlichkeit gemäß den Merkmalspunktdeskriptorinformationen;
Einordnung der Merkmalspunktähnlichkeiten ;
Auswahl einer Mehrzahl von Merkmalspunkten mit der höchsten Merkmalspunktähnlichkeit und den festen Positionen auf den Bildrahmen als übereinstimmenden Merkmalspunkten der zwei Bildrahmen;
Berechnung eines Zwischenbildertransformationskoeffizienten zwischen der integrierten Mikrofon-Arraykamera und der hochauflösenden Kamera über eine lineare Koordinatentransformation; und
Erzielung einer Positionsanpassung zwischen dem niedrigauflösenden Bildrahmen und dem hochauflösenden Bildrahmen.

4. Verfahren nach Anspruch 3, wobei die Erfassung des Merkmalspunktes des Bildrahmens verweist auf: die Durchführung eines Gaußschen Weichzeichners auf dem Bildrahmen zum Konstrukt einer Pyramide und zum Erhalten von verschiedenen Skala-Räumen; das Erhalten eines lokalen Extrempunktes über eine Extrempunktdetektion auf verschiedenen Skala-Räumen; und die Durchführung von vorläufiger und genauer Positionierung auf den lokalen Extrempunkt, die Löschung eines Randreaktionspunktes , und das Erhalten des Merkmalspunktes.

5. Verfahren nach Anspruch 3, wobei der Merkmalspunkt zu mindesten vier Paaren umfasst.

6. Verfahren nach Anspruch 3, wobei ein Merkmalspunktdeskriptor gemäß der GradientGröße und -Richtung des Merkmalspunktes erzeugt wird.

7. Verfahren nach Anspruch 3, wobei der Merkmalspunktdeskriptor durch Berechnung auf der folgenden Weise erhalten wird :

$$\frac{3\sigma_{oct} \times \sqrt{2} \times (d+1)+1}{2}$$

A1: Bestimmung des Strahles notwendig zur Berechnung des Merkmalspunktdeskriptors in einem Bildbereich, wobei $\sigma_{oct}$ eine Gruppenskala einer Gruppe ist, in der der Merkmalspunkt geortet ist; und d die Anzahl der Unterbereiche ist, die von der Umgebung in der Nähe des Merkmalspunktes aufgeteilt sind;
A2: Verschiebung einer Koordinate nach der Hauptdirektion des Merkmalspunktes, und eine neue Koordinate ist:

$$\begin{pmatrix} \hat{x} \\ \hat{y} \end{pmatrix} = \begin{pmatrix} \cos\theta & -\sin\theta \\ \sin\theta & \cos\theta \end{pmatrix} \times \begin{pmatrix} x \\ y \end{pmatrix};$$

A3: Lösung der Gradientgröße und der Richtung jedes Pixels in einem Bildstrahlbereich, danach Multiplizierung jeder Gradientamplitude mit einem Gaußschen Gewichtparameter zur Erzeugung eines Richtungshistogramms:

$$Gewicht = |grad(/u(x,y))| \times exp\left(- \frac{x^2_k + y^2_k}{2\sigma_w}\right) \times (1 - d_r) \times (1 - d_c) \times (1 - d_o),$$

wobei $x_k$ der Spaltenabstand dieses Punktes zum Merkmalspunkt ist, $y_k$ der Reihenabstand zum Merkmalspunkt ist, $\sigma_w$ der halbe Produkt der Mermalspunktdeskriptorfensterbreite und der Spaltennummer eines Histogramms, $d_r$ der beitragende Faktor zu einer angrenzenden Reihe ist, $d_c$ der beitragende Faktor zu einer angrenzenden Spalte ist, und $d_0$ der beitragende Faktor zu einer angrenzenden Richtung ist; und

A4: Normalisierung eines Vektors des Merkmalspunktdeskriptors , der Vektor des Deskriptors von 128 Merk-

$$l_j = \frac{w_j}{\sqrt{\sum_{i=1}^{128} w_i}}$$

malspunkten ist W = ($w_1$, $w_2$, ...$w_{128}$), eine normalisierte Vektor ist L = ($l_1$, $l_2$,...$l_{128}$), wobei , $j$ = 1,2, ... ,128.

8. Verfahren nach Anspruch 3, wobei die Merkmalspunktähnlichkeit auf das Folgende hinweist:

die Berechnung der Ähnlichkeitsmetrik zwischen irgendwelchen zwei Merkmalspunktdeskriptoren gemäß *tod(Ri, Si)* = $\sqrt{\sum_{j=1}^{128}(r_{ij} - s_{ij})^2}$, und die Berechnung der Merkmalspunktähnlichkeit gemäß der Merkmalspunktähnlichkeit = Punkt $S_j$ nächst zu $R_i$ im hochauflösenden Bildrahmen Punkt $S_p$ zweitnächst zu $R_i$ im hochauflösenden Bildrahmen

für den Merkmalspunktdeskriptor $R_i$ = ($r_{i1}$, $r_{i2}$,..... $r_{i128}$) im hochauflösenden Bildrahmen und für den Merkmalspunktdeskriptor $S_i$ = ($s_{i1}$, $s_{i2}$,..... $s_{i128}$) im niedrigauflösenden Bildrahmen.

9. Verfahren nach Anspruch 3, wobei die lineare Koordinatentransformation die folgenden Schritte spezifisch umfasst:

$$\begin{bmatrix} x \\ y \\ 1 \end{bmatrix} = \begin{bmatrix} h_{11} & h_{12} & h_{13} \\ h_{21} & h_{22} & h_{23} \\ h_{31} & h_{32} & 1 \end{bmatrix} \begin{bmatrix} x' \\ y' \\ 1 \end{bmatrix}$$

A1: eine projektive Transformationsformel ist : wobei (x, y) eine Mittenstellungskoordinate einer Schallquelle auf dem niedrigauflösenden Bildrahmen von der integrierten Mikrofon-Array erhalten, ist, (x', y') eine Pixelkoordinate des hochauflösenden Bildrahmens von der hochauflösenden

Kamera erhalten, ist, $\begin{bmatrix} h_{11} & h_{12} \\ h_{21} & h_{22} \end{bmatrix}$ eine Drehmatrix ist, [$h_{31}$ $h_{32}$] ein Translationsvektor ist, und $\begin{bmatrix} h_{13} \\ h_{23} \end{bmatrix}$ eine Skaladimension ist;

A2: der Zwischenbildertransformationskoeffizient zwischen einem niedrigauflösenden Bildrahmenpixelpunktkoordinate von der integrierten Mikrofon-Array erhalten und dem hochauflösenden Bildrahmenpixelpunktkoordinate von der hochauflösenden Kamera erhalten, wird durch Aufstellung eines folgenden Gleichungssatz erhalten und wird mittels der Methode der kleinsten Quadrate gelöst: In

$$\mathbf{1}\begin{bmatrix} x_1 & y_1 & 1 & 0 & 0 & 0 & -x'_1 x_1 & -x'_1 y_1 \\ 0 & 0 & 0 & x_1 & y_1 & 1 & -y'_1 x_1 & -y'_1 y_1 \\ x_2 & y_2 & 1 & 0 & 0 & 0 & -x'_2 x_2 & -x'_2 y_2 \\ 0 & 0 & 0 & x_2 & y_2 & 1 & -y'_2 x_2 & -y'_2 y_2 \\ x_3 & y_3 & 1 & 0 & 0 & 0 & -x'_3 x_3 & -x'_3 y_3 \\ 0 & 0 & 0 & x_3 & y_3 & 1 & -y'_3 x_3 & -y'_3 y_3 \\ x_4 & y_4 & 1 & 0 & 0 & 0 & -x'_4 x_4 & -x'_4 y_4 \\ 0 & 0 & 0 & x_4 & y_4 & 1 & -y'_4 x_4 & -y'_4 y_4 \\ \vdots & \vdots & \vdots & \vdots & \vdots & \vdots & \vdots & \vdots \\ x_n & y_n & 1 & 0 & 0 & 0 & -x'_n x_n & -x'_n y_n \\ 0 & 0 & 0 & x_n & x_n & 1 & -y'_n x_n & -y'_n y_n \end{bmatrix} \cdot \begin{bmatrix} h_{11} \\ h_{12} \\ h_{13} \\ h_{21} \\ h_{22} \\ h_{23} \\ h_{31} \\ h_{32} \end{bmatrix} = \begin{bmatrix} x'_1 \\ y'_1 \\ x'_2 \\ y'_2 \\ x'_3 \\ y'_3 \\ x'_4 \\ y'_4 \\ \vdots \\ x'_n \\ y'_n \end{bmatrix},$$

wobei $(x_i, y_i)$ eine übereinstimmende Merkmalspunktkoordinate des niedrigauflösenden Bildrahmen von der integrierten Mikrofon-Array erhalten, ist, ist $(x'_i, y'_i)$ die übereinstimmende Merkmalspunktkoordinate des hochauflösenden Bildrahmen von der hochauflösenden Kamera erhalten, i = 1,2,3..... n, n $\geq$ 4, und ist $[h_{11}\ h_{12}\ h_{13}\ h_{21}\ h_{22}\ h_{23}\ h_{31}\ h_{32}]^T$ der Zwischenbildertransformationskoeffizient; und

A3: erhalten von der projektiven Transformationsformel, die Mittelstellungskoordinate $(x, y)$ der Schalquelle auf dem niedrigauflösenden Bildrahmen von der von der integrierten Mikrofon-Array entspricht der Koordinate $(x'_i, y'_i)$ in dem hochauflösenden Bildrahmen durch die hochauflösende Kamera wie folgt erhalten:

$$x' = \frac{h_{11}x + h_{12}y + h_{13}}{h_{31}x + h_{32}y + 1}, \quad y' = \frac{h_{21}x + h_{22}y + h_{23}}{h_{31}x + h_{32}y + 1}.$$

## Revendications

1. Système d'identification d'un véhicule utilisant un avertisseur basé sur un positionnement de source sonore et sur un appariement d'images, le système comprenant :

   - un réseau de microphones intégré configuré pour acquérir de l'audio et une trame d'image de basse résolution en temps réel ;
   - une caméra à haute définition configurée pour acquérir une trame d'image de haute résolution en temps réel ;
   - une unité de commande (3) ; et
   - un système d'appariement d'images,
   dans lequel le réseau de microphones intégré comporte un réseau de microphones composé d'une pluralité de microphones (1) et une caméra (2) configurée pour acquérir une trame d'image de basse résolution ; l'unité de commande (3) est configurée pour surveiller la trame d'image de basse résolution qui est acquise par le réseau de microphones intégré et superposée avec une coordonnée de position centrale d'une source sonore d'avertisseur lorsqu'un avertisseur est activé, qui est obtenue par le réseau de microphones intégré après calcul, et est en même temps configurée pour acquérir la trame d'image de haute résolution de la caméra à haute définition et est configurée pour sortir la trame d'image de haute résolution vers le système d'appariement d'images, et le système d'appariement d'images est configuré pour acquérir un coefficient de transformation inter images entre la trame d'image de basse résolution et la trame d'image de haute résolution, de façon à obtenir une position correspondante de la coordonnée de position centrale de la source sonore d'avertisseur dans la trame d'image à haute résolution, et est configuré pour procurer des informations d'immatriculation d'un véhicule correspondant à la position par l'intermédiaire d'une technologie de reconnaissance de cible d'image.

2. Système selon la revendication 1, dans lequel la caméra (2) et le réseau de microphones dans le réseau de microphones intégré présentent une conception intégrée, c'est-à-dire que la position relative de la caméra (2) et celle de tous les microphones (1) du réseau de microphones sont inchangées, qu'une coordonnée de position centrale de source sonore qui est obtenue par le réseau de microphones intégré après calcul et un coefficient de coordonnée prédéterminé d'un point pixel dans la trame d'image de basse résolution sont inchangés ; et que le réseau de microphones intégré sort la trame d'image de basse résolution superposée avec la coordonnée de position centrale de la source sonore d'avertisseur vers l'unité de commande.

3. Procédé d'appariement d'images dans le système selon la revendication 1 ou 2, le procédé d'appariement d'images comprenant les étapes suivantes:

acquérir au moyen de l'unité de commande (3) en même temps deux trames d'image du réseau de microphones intégré et de la caméra à haute définition ;
acquérir au moyen du système d'appariement d'images un point caractéristique et un descripteur de point caractéristique correspondant pour chacune des trames d'image ;
obtenir une similarité de point caractéristique selon les informations de descripteur de point caractéristique ;
classer les similarités de points caractéristiques ;
sélectionner une pluralité de points caractéristiques avec la plus forte similarité de points caractéristiques et les positions fixes sur les trames d'image et faire correspondre des points caractéristiques des deux trames d'image ;
calculer un coefficient de transformation inter images entre la caméra de réseau de microphones intégré et la caméra à haute définition au moyen d'une transformation de coordonnées linéaire ; et
réaliser une correspondance de positions entre la trame d'image de basse résolution et la trame d'image de haute résolution.

4. Procédé selon la revendication 3, dans lequel l'étape d'acquérir le point caractéristique de la trame d'image se réfère : à la réalisation d'un flou gaussien sur la trame d'image afin de construire une pyramide gaussienne et d'obtenir des espaces d'échelle différente ; à l'obtention d'un point extrême local par détection de points extrêmes sur des espaces d'échelle différente, et à la réalisation d'un positionnement préliminaire et précis sur le point extrême local, à supprimer un point de réponse limite, et à l'obtention du point caractéristique.

5. Procédé selon la revendication 3, dans lequel le point caractéristique comporte au moins quatre paires.

6. Procédé selon la revendication 3, dans lequel un descripteur de point caractéristique est généré selon la grandeur de gradient et la direction du point caractéristique.

7. Procédé selon la revendication 3, dans lequel le descripteur de point caractéristique est obtenu par calcul des façons suivantes :

$$\text{rayon} = \frac{3\sigma_{oct} \times \sqrt{2} \times (d+1)+1}{2}$$

A1 : déterminer le rayon nécessaire au calcul du descripteur de point caractéristique dans une zone d'image, où $\sigma_{oct}$ est une échelle de groupe d'un groupe où le point caractéristique est localisé ; et d est le nombre de sous-régions qui sont réparties du voisinage à proximité du point caractéristique ;

A2 : déplacer une coordonnée vers la direction principale du point caractéristique, et une nouvelle coordonnée est :

$$\begin{pmatrix} \hat{x} \\ \hat{y} \end{pmatrix} = \begin{pmatrix} \cos\theta & -\sin\theta \\ \sin\theta & \cos\theta \end{pmatrix} \times \begin{pmatrix} x \\ y \end{pmatrix} ;$$

A3 : résoudre la grandeur de magnitude et la direction de chaque point pixel dans une région de rayon d'image, puis multiplier chaque amplitude de gradient par une paramètre de poids gaussien afin de générer un histogramme de directions :

$$poids = |grad(/u(x,y))| \times exp\left(-\frac{x^2_k + y^2_k}{2\sigma_w}\right) \times (1 - d_r) \times (1 - d_c) \times (1 - d_o),$$

où $x_k$ est le distance de colonne du point au point caractéristique, $y_k$ est la distance de rangée du point au point caractéristique, $\sigma_w$ est la moitié du produit de la largeur de fenêtre de descripteur de point caractéristique $3\sigma$ et du numéro de colonne d'un histogramme, $d_r$ est le facteur contributeur à une rangée voisine, $d_c$ est le facteur contributeur à une colonne voisine, et $d_o$ est le facteur contributeur à une direction voisine, et

A4: normalisation d'un vecteur du descripteur de point caractéristique, le vecteur de descripteur de 128 points caractéristiques est $W = (w_1, w_2, ... w_{128})$, un vecteur normalisé est $L = (l_1, l_2, ... l_{128})$, où $l_j = \dfrac{w_j}{\sqrt{\sum_{i=1}^{128} w_i}}$, j =

1,2, ... ,128,

**8.** Procédé selon la revendication 3, dans lequel la similarité de points caractéristiques se réfère au calcul d'une mesure de similarité entre deux descripteurs de point caractéristique quelconques selon *tod(Ri, Si)* $=\sqrt{\Sigma^{128}_{j=1}(rij - sij)^2}$, et au calcul de la similarité de point caractéristique selon la similarité de points caractéristiques

=

point $S_j$le plus proche de Ri dans la trame d'image de haute résolution$_p$ le deuxième plus proche de Ri dans la trame d'image de haute résolution

pour le descripteur de point caractéristique $R_i = (r_{i1}, r_{i2},..... r_{i128})$ dans la trame d'image de haute résolution et pour le descripteur de point caractéristique $S_i = (s_{i1}, s_{i2},..... s_{i128})$ dans la trame d'image de basse résolution.

**9.** Procédé selon la revendication 3, dans lequel la transformation linéaire des coordonnées comporte les étapes suivantes :

$$\begin{bmatrix} x \\ y \\ 1 \end{bmatrix} = \begin{bmatrix} h_{11} & h_{12} & h_{13} \\ h_{21} & h_{22} & h_{23} \\ h_{31} & h_{32} & 1 \end{bmatrix} \begin{bmatrix} x' \\ y' \\ 1 \end{bmatrix}$$

A1 : une formule de transformation projective est : dans laquelle (x,y) est une coordonnée de position centrale d'une source sonore sur la trame d'image de basse résolution obtenue par un réseau de microphones intégré, (x', y') est une coordonnée de point de pixel de la trame d'image de haute

$$\begin{bmatrix} h_{11} & h_{12} \\ h_{21} & h_{22} \end{bmatrix}$$

résolution obtenue par la caméra à haute résolution, est une matrice de rotation, $[h_{31}\ h_{32}]$ est un

$$\begin{bmatrix} h_{13} \\ h_{23} \end{bmatrix}$$

vecteur de translation, et est une dimension de mise à l'échelle ;

A2 : le coefficient de transformation inter-image entre une coordonnée de point de pixel de trame d'image de basse résolution obtenue par le réseau de microphones intégré et une coordonnée de point de pixel de trame d'image de haute résolution obtenue par la caméra à haute résolution est obtenu en établissant le jeu d'équations suivant, et est résolu au moyen d'une méthode des moindres carrés : Dans

$$\begin{bmatrix} x_1 & y_1 & 1 & 0 & 0 & 0 & -x_1'x_1 & -x_1'y_1 \\ 0 & 0 & 0 & x_1 & y_1 & 1 & -y_1'x_1 & -y_1'y_1 \\ x_2 & y_2 & 1 & 0 & 0 & 0 & -x_2'x_2 & -x_2'y_2 \\ 0 & 0 & 0 & x_2 & y_2 & 1 & -y_2'x_2 & -y_2'y_2 \\ x_3 & y_3 & 1 & 0 & 0 & 0 & -x_3'x_3 & -x_3'y_3 \\ 0 & 0 & 0 & x_3 & y_3 & 1 & -y_3'x_3 & -y_3'y_3 \\ x_4 & y_4 & 1 & 0 & 0 & 0 & -x_4'x_4 & -x_4'y_4 \\ 0 & 0 & 0 & x_4 & y_4 & 1 & -y_4'x_4 & -y_4'y_4 \\ \vdots & \vdots & \vdots & \vdots & \vdots & \vdots & \vdots & \vdots \\ x_n & y_n & 1 & 0 & 0 & 0 & -x_n'x_n & -x_n'y_n \\ 0 & 0 & 0 & x_n & x_n & 1 & -y_n'x_n & -y_n'y_n \end{bmatrix} \begin{bmatrix} h_{11} \\ h_{12} \\ h_{13} \\ h_{21} \\ h_{22} \\ h_{23} \\ h_{31} \\ h_{32} \end{bmatrix} = \begin{bmatrix} x_1' \\ y_1' \\ x_2' \\ y_2' \\ x_3' \\ y_3' \\ x_4' \\ y_4' \\ \vdots \\ x_n' \\ y_n' \end{bmatrix}$$

, où $(x_i, y_i)$ est une coordonnée de point caractéristique correspondante de la trame d'image de basse résolution obtenue par le réseau de microphones intégré, $(x'_i, y'_i)$ est la coordonnée de point caractéristique correspondante de la trame d'image de haute résolution obtenue par la caméra à haute résolution, i = 1,2,3..... n, n $\geq$ 4, et

$$\begin{bmatrix} h_{11} & h_{12} & h_{13} & h_{21} & h_{22} & h_{23} & h_{31} & h_{32} \end{bmatrix}^T$$

est le coefficient de transformation inter-image ; et

A3 : obtenue de la formule de transformation projective, la coordonnée (x, y) de position centrale de la source sonore sur la trame d'image de basse résolution obtenue par le réseau de microphones intégré correspond à la coordonnée (x', y') dans la trame d'image de haute résolution obtenue par la caméra à haute définition comme suit :

$$x' = \frac{h_{11}x + h_{12}y + h_{13}}{h_{31}x + h_{32}y + 1} , y' = \frac{h_{21}x + h_{22}y + h_{23}}{h_{31}x + h_{32}y + 1}$$

```
                          ┌─────────────────────────┐
                          │ Integrated microphone array │
                          └─────────────────────────┘
         ┌ ─ ─ ─ ─ ─ ─ ─ ─ ─ ─ ─ ─ ─ ─ ─ ─ ─ ─ ─ ─ ┐
         │    ┌─────────┐        ┌─────────┐         │
         │    │  Audio  │        │  Image  │         │
         │    └─────────┘        └─────────┘         │
         │              ┌──────────────┐             │
         │              │  Anechoic     │            │
         │              │  chamber      │            │
         │              │  calibration  │            │
         │              └──────────────┘             │
         └ ─ ─ ─ ─ ─ ─ ─ ─ ─ ─ ─ ─ ─ ─ ─ ─ ─ ─ ─ ─ ┘
                   ┌──────────────────┐
                   │ Preset coordinate │
                   │   coefficient     │
                   └──────────────────┘
```

When horn is honked

Integrated microphone array

High-definition camera

Audio when horn is honked

One frame image when horn is honked

One frame image when horn is honked

Central position coordinate of horn sound source

Matching?

N

Y

Image Matching

Performing one matching by default

Calibrated inter-image transformation coefficient

Newly calibrated inter-image transformation coefficient

Inter-image transformation coefficient

Low-resolution image superimposed with central position coordinate of horn sound source

Position of horn sound source on image

License plate information

FIG. 1

FIG. 2

FIG. 3

FIG. 4

a)                                                           b)

FIG. 5

FIG. 6

**EP 3 822 854 B1**

**Patent documents cited in the description**

- CN 107045784 A
- CN 106355893 A
- CN 106384510 A
- CN 106875678 A